(19) Europäisches Patentamt
European Patent Office
Office européen des brevets

(11) Numéro de publication: **0 030 881**
**B1**

(12) # FASCICULE DE BREVET EUROPEEN

(45) Date de publication du fascicule du brevet: **21.09.83**

(51) Int. Cl.³: **C 04 B 13/24**, C 04 B 13/21

(21) Numéro de dépôt: **80401697.0**

(22) Date de dépôt: **28.11.80**

(54) **Nouvelles compositions à base de polymères synthétiques et leur utilisation comme adjuvants des mélanges de liants hydrauliques.**

(30) Priorité: **13.12.79 FR 7931188**

(43) Date de publication de la demande: **24.06.81 Bulletin 81/25**

(45) Mention de la délivrance du brevet: **21.09.83 Bulletin 83/38**

(84) Etats contractants désignés: **AT BE CH DE FR GB IT LI NL SE**

(56) Documents cités:

FR-A-1 574 213
FR-A-2 172 554
US-A-3 067 058
US-A-3 329 641
US-A-4 088 804
US-A-4 125 504

CHEMICAL ABSTRACTS, vol. 90, no. 22, May, 28, 1979, page 324 réf.: 173629y Columbus, Ohio, US

**Le dossier contient des informations techniques présentées postérieurement au dépôt de la demande et ne figurant pas dans le présent fascicule.**

(73) Titulaire: **RHONE-POULENC SPECIALITES CHIMIQUES, "Les Miroirs" 18, Avenue d'Alsace, F-92400 Courbevoie (FR)**

(72) Inventeur: **Filhol, Raymond, 5, rue Camille de Neuville, F-69009 Lyon (FR)**
Inventeur: **Cormoreche, Paul, 19, Quai Arloing, F-69009 Lyon (FR)**

(74) Mandataire: **Tavernier, Colette et al, RHONE POULENC RECHERCHES Service Brevets Chimie et Polymères 25, Quai Paul Doumer, F-92408 Courbevoie Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 030 881 B1

ACTORUM AG

# Nouvelles compositions à base de polymères synthétiques et leur utilisation comme adjuvants des mélanges de liants hydrauliques

La présente invention se rapporte à des compositions à base de polymères synthétiques utilisables notamment comme adjuvants à des mélanges à base de liants hydrauliques.

Plus particulièrement, la présente invention concerne des compositions à base de polymères synthétiques utilisables comme adjuvants destinés par exemple à être incorporés dans les mélanges de fabrication de mortiers et bétons de liants hydrauliques voués à être accrochés sur des matériaux de construction constitués d'une matière minérale poreuse telle que notamment la brique, la pierre ou le béton, ou encore destinés à être incorporés dans les mélanges de fabrication de coulis de liants hydrauliques utilisés pour la fabrication de sols industriels à base d'enrobés bitumineux ouverts.

L'expression «liants hydrauliques» désigne des produits, comme par exemple le ciment et la chaux, qui sont aptes à faire prise et à durcir en présence d'eau avec formation de composés stables.

Les travaux consistant à accrocher des mortiers et bétons frais sur des matériaux de construction posent le problème de l'adhérence. Ce problème se rencontre, notamment, dans les applications suivantes: fixation du mortier frais ou bétons frais sur béton durci lisse ou sur béton ancien dans le cadre de la réalisation de chapes, chapes normales, chapes anti-poussières, chapes d'usure; confection d'enduits de protection ou de décoration à l'intérieur et à l'extérieur des bâtiments; réparation d'épaufrures sur tous les ouvrages en béton, béton armé, pierres et briques; exécution de joints de maçonnerie.

On a déjà proposé d'améliorer l'adhérence d'un revêtement de ciment hydraulique au moyen d'un latex synthétique et d'un agent réducteur d'eau (brevet US-A 4 088 804).

On a constaté que l'addition d'un latex qui permet de conférer au mortier les propriétés d'adhérence voulues a tendance à augmenter le retrait à l'air sec et le gonflement dans l'eau du mortier durci.

Un des buts de la présente invention est de fournir de nouveaux adjuvants qui confèrent aux mortiers et bétons auxquels ils sont incorporés de bonnes propriétés d'adhérence (à sec comme en immersion dans l'eau) sur des matériaux de construction, tout en conduisant à des caractéristiques:

— en matières de retrait à l'air sec et de gonflement dans l'eau du mortier ou béton durci: qui soient comparables à celles du mortier ou béton sans adjuvant (témoin);

— et en matières de résistances mécaniques à court (24 heures) et moyen (28 jours) termes: qui soient sensiblement améliorées par rapport à celles du témoin.

Un autre but que vise l'invention est de fournir de nouveaux adjuvants pour mortiers et bétons qui soient faiblement entraineurs d'air à la dose d'emploi prévue, de manière à ce que leur utilisation se fasse sans inconvénients, notamment dans des conditions de malaxage mécanique du mortier ou du béton, pour les résistances mécaniques et les résistances à l'abrasion du matériau durci.

Un autre but que vise encore la présente invention est de fournir des nouveaux adjuvants très efficaces dont la dose d'emploi, exprimée par rapport au liant, soit la moins élevée possible pour des raisons d'ordre économique.

D'autres buts et applications que vise encore la présente invention apparaîtront au cours de la description qui va suivre.

Il a maintenant été trouvé que l'on pouvait arriver à tout ou partie de ces buts grâce à de nouvelles compositions conformes à la présente invention. Ces compositions adjuvantes sont caractérisées en ce qu'elles comprennent à titre de constituants essentiels:

(a) un mélange d'au moins deux dispersions aqueuses de polymères vinyliques différents.

(b) une solution aqueuse renfermant soit un agent réducteur d'eau, soit un mélange d'un agent réducteur d'eau avec un sel soluble dans l'eau, dérivé d'un mono- ou polyacide oxygéné, minéral ou carboxylique, dont l'une au moins des fonctions acides possède une constante d'ionisation pka dans l'eau à 25°C inférieure à 2,5.

Au sens du présent texte:

— l'expression «dispersion aqueuse» désigne un mélange comprenant une phase continue, constituée par de l'eau et, en suspension dans cette phase aqueuse, des particules solides ou des gouttelettes d'un polymère insoluble dans l'eau. Une pareille dispersion aqueuse sera appelée dans ce qui suit: latex.

— l'expression «polymère vinylique» désigne un composé macromoléculaire résultant de la polymérisation d'un ou plusieurs monomères comportant au moins une double liaison carbone-carbone à caractère éthylénique.

— l'expression «agent réducteur d'eau» désigne un produit, soluble dans l'eau, qui permet, à même maniabilité une réduction de la teneur en eau d'un coulis, mortier ou béton donné ou qui, à une même teneur en eau, augmente notablement cette maniabilité ou encore qui permet d'obtenir ces deux effets simultanément.

La préparation des dispersions aqueuses de polymères vinyliques peut se faire par application des méthodes largement décrites dans la littérature; bien qu'il soit possible de préparer séparément un polymère puis de la disperser dans l'eau, il est plus avantageux d'utiliser les méthodes traditionnelles de polymérisation ou copolymérisation en émulsion ou en dispersion. On peut, sur ce point, se reporter à l'un des ouvrages suivants:

. Schildknecht - Vinyl and Related Polymers - John Wiley 1952
. Bovey et coll. Emulsion, Polymerisation Interscience 1955
. Leonard - Vinyl and Diene Monomers - Wiley Interscience.

Les polymères vinyliques, selon la présente invention, peuvent être préparés à partir de monomères variés: ces monomères comportent en général de 2 à 14 atomes de carbone et une ou deux liaisons à

caractère éthylénique. Ils peuvent notamment être choisis parmi les produits suivants:

. des hydrocarbures insaturés: de nature aliphatique tels que par exemple les hydrocarbures monoéthyléniques suivants: éthylène, propène, butène, isobutène ou les hydrocarbures diéthyléniques suivants: butadiène-1,3, méthyl-2 butadiène-1,3, diméthyl-2,3 butadiène-1,3, méthyl-2 pentadiène-1,3; de nature aromatique comme par exemple le styrène, les α - et β -chlorostyrènes, α - et β -méthylstyrènes, le méthyl-3 styrène, le méthyl-4 styrène, le diméthyl-2,4 styrène, le triméthyl-2,4,6 styrène, l'isopropyl-4 styrène, le t-butyl-4 styrène, les ortho-, méta- et paradivinylbenzènes, les α - et β - -vinylnaphtalènes;

. des acides carboxyliques, α , β -insaturés, applicables dans la préparation des latex et contenant de préférence de 3 à 6 atomes de carbone, tels que par exemple les acides acrylique, méthacrylique, crotonique, maléique, fumarique, citraconique, mésaconique, itaconique;

des esters de pareils acides insaturés avec des alcools aliphatiques ou cycloaliphatiques saturés ayant jusqu'à 8 atomes de carbone tels que par exemple l'acrylate de méthyle, le méthacrylate de méthyle, l'acrylate d'éthyle, le méthacrylate d'éthyle, l'acrylate d'isopropyle, le méthacrylate d'isopropyle, l'acrylate de n-butyle, le méthacrylate de n-butyle, l'acrylate d'isobutyle, le méthacrylate d'isobutyle, l'acrylate de cyclohexyle; des nitriles, amides, anhydrides dérivés de pareils acides insaturés tels que par exemple l'acrylonitrile, le méthacrylonitrile, l'acrylamide, le méthacrylamide, l'anhydride maléique;

. des dérivés vinyliques tels que par exemple le chlorure de vinyle, le chlorure de vinylidène, les esters vinyliques d'acides aliphatiques saturés ayant jusqu'à 12 atomes de carbone, comme par exemple l'acétate de vinyle, le propionate de vinyle, le butyrate de vinyle, le laurate de vinyle ou d'acides aromatiques ayant jusqu'à 10 atomes de carbone comme par exemple le benzoate de vinyle.

Parmi les latex utilisables en mélange dans l'invention et qui dérivent des monomères précités, on peut mentionner en particulier:

. les latex (désignés dans ce qui suit par: latex A) qui résultent de la copolymérisation en émulsion ou en suspension d'un monomère du type hydrocarbure insaturé de nature aromatique avec un monomère appartenant aux groupes des composés acryliques et méthacryliques (acides, esters, nitriles, amides ou anhydrides);

. les latex (désignés dans ce qui suit par: latex B) qui résultent de la copolymérisation d'un monomère du type hydrocarbure insaturé renfermant un cycle aromatique avec un monomère appartenant au groupe des hydrocarbures aliphatiques diéthyléniques;

. les latex (désignés dans ce qui suit par: latex C) qui résultent de l'homopolymérisation d'un monomère choisi dans le groupe des esters vinyliques;

. des latex (désignés par: latex D) qui résultent de la copolymérisation d'au moins deux esters vinyliques, comme par exemple l'acétate de vinyle, le propionate de vinyle et le laurate de vinyle.

Toutes ces dispersions aqueuses de polymères vinyliques ou latex renferment en général de 30 à 60% de polymère sec. La quantité du mélange (a) d'au moins deux latex représente en général de 10 à 95% du poids de l'ensemble mélange des latex (a) + solution aqueuse (b).

Parmi les mélanges (a) de latex utilisables dans la présente invention, on fait appel de préférence aux mélanges binaires: latex A + latex B. Dans ce groupe préféré de mélanges, conviennent tout particulièrement bien les mélanges dans lesquels:

. les latex A résultent de la copolymérisation du styrène avec l'un des monomères suivants: acrylate de méthyle, acrylate d'éthyle, acrylate d'isopropyle, acrylate de n-butyle, acrylate d'isobutyle et contiennent au moins environ 30% en poids de styrène lié (latex désignés dans ce qui suit par: latex A1);

. les latex B résultent de la copolymérisation du styrène avec l'un des monomères suivants: butadiène-1,3 méthyl-2 butadiène-1,3, diméthyl-2,3 butadiène-1,3 et contiennent au moins environ 30% en poids de styrène lié (latex désignés dans ce qui suit par: latex B1).

La quantité de latex A dans le mélange latex A + latex B, exprimée par le rapport pondéral latex A/latex B, peut varier dans de larges limites; plus précisément cette quantité peut être comprise entre 0,5 et 50.

Comme autres mélanges (a) préférés pour préparer les compositions selon la présente invention, on citera les mélanges ternaires: latex A + latex B + latex C. Dans ce second groupe préféré de mélanges, conviennent tout particulièrement bien les mélanges dans lesquels:

. Les latex A ont la signification donnée ci-avant pour les latex A1;

. les latex B ont la signification donnée ci-avant pour les latex B1;

. les latex C résultent de l'homopolymérisation des esters vinyliques suivants: acétate de vinyle, propionate de vinyle, butyrate de vinyle (latex désignés par: latex C1).

La quantité de latex C représente habituellement jusqu'à 30% du poids du mélange latex A + latex B + latex C. Il convient de noter que, dans ces mélanges ternaires, le rapport pondéral latex A/latex B peut varier entre les mêmes limites que celles précédemment mentionnées pour les mélanges binaires. La quantité de latex C que l'on utilise de préférence peut représenter entre 4 et 20% du poids du mélange latex A + latex B + latex C.

Le deuxième constituant essentiel (b) des compositions conformes à l'invention est une solution aqueuse renfermant soit un agent réducteur d'eau, soit un mélange d'un agent réducteur d'eau avec un sel soluble dans l'eau dérivé d'un mono- ou polyacide oxygéné fort de nature minérale ou carboxylique.

Le choix de l'agent réducteur d'eau est lié essentiellement à ses caractéristiques de solubilité dans l'eau. A titre d'illustration de tels agents, on peut citer:

. les produits de sulfonation par les sulfites ou l'acide sulfonique des résines mélamine/formol (cf. notamment le brevet français n° 1 510 314).

. les acides obtenus par transformation de la lignine à l'aide de sulfites ou de l'acide sulfureux; ainsi

que leurs sels hydrosolubles (cf. notamment le brevet américain n° 3 772 045);

. les sels hydrosolubles des produits de condensation obtenus en condensant avec du formaldéhyde des produits de sulfonation de phénols à un ou plusieurs noyaux (cf. notamment le brevet français n° 2 182 825);

. les sels alcalins ou d'ammonium de polyacides organiques tels que par exemple les acides polyvinylsulfonique, naphtalène trisulfonique, carbazoltétrasulfonique, naphtoltrisulfonique (cf. notamment le brevet américain n° 2 905 565).

L'agent réducteur d'eau qui est utilisé de préférence aux fins de l'invention est constitué par les sels hydrosolubles de produits de condensation, de poids moléculaire compris entre 1500 et 10000, obtenus en condensant le formaldéhyde avec des produits de sulfonation d'hydrocarbures aromatiques monocycliques ou polycycliques condensés contenant de 1 à 12 noyaux benzéniques.

On peut citer par exemple des sels hydrosolubles obtenus par condensation avec le formaldéhyde de produits de sulfonation d'hydrocarbures aromatiques tels que: le benzène, le naphtalène, le fluorène, l'anthracène, le phénantrène, le pyrène, le naphtacène, le pentacène, l'hexacène, l'heptacène, l'octacène, le nonacène, le décacène, l'indécacène, le dodécacène, et les dérivés de ces composés aromatiques ayant de 1 à 3 substituants alkyles linéaires ou ramifié comportant de 1 à 3 atomes de carbone.

Lesdits produits de condensation qui entrent dans le cadre de la présente invention sont des composés de formule:

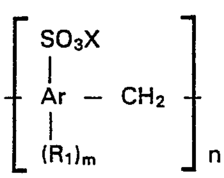

(I)

dans laquelle:

— Ar représente des groupes aryles, monocycliques ou polycycliques condensés, contenant de 1 à 12 noyaux benzéniques, tels que les groupes aryles dérivés des hydrocarbures aromatiques visés ci-avant;

— $R_1$ représente un radical alkyle, linéaire ou ramifié, ayant de 1 à 3 atomes de carbone;

— X est un reste cationique d'origine minérale ou organique choisi de manière à ce que le composé de formule (I) soit soluble dans l'eau;

— m est un nombre entier allant de 0 à 3;

— n est un nombre ajusté de façon à obtenir un poids moléculaire moyen compris entre 1500 et 10000.

Comme sels de formule (I) convenant à la préparation des compositions selon l'invention, on peut citer ceux dans lesquels les restes cationiques X, associés aux groupes sulfonates portés par les cycles aromatiques, sont des cations minéraux dérivés de métaux alcalins ou alcalino-terreux, tels que le lithium, le sodium, le potassium, le calcium, le baryum, ou dérivés de métaux pris dans le groupe formé par le plomb, l'aluminium, le zinc et le cuivre; il peut s'agir encore d'ions ammonium $NH_4^+$, ou bien d'ions ammonium quaternaire de formule: $N(R_2, R_3, R_4, R_5)^+$ dans laquelle les radicaux $R_2$, $R_3$, $R_4$, et $R_5$ qui peuvent être identiques ou différents, représentent chacun un radical alkyle, linéaire ou ramifié, comportant de 1 à 4 atomes de carbone.

Parmi les cations d'ammonium quaternaire, on peut citer plus particulièrement les ions tétraméthylammonium, tétraéthylammonium, méthyltriéthylammonium, tétrapropylammonium, triéthylbutylammonium, tétrabutylammonium.

Les sels de formule (I) peuvent être aussi bien des sels simples que des sels mixtes issus du mélange de plusieurs des restes cationiques X précités.

Comme sels de formule (I) auxquels on fait appel de préférence pour la préparation des compositions selon l'invention, on peut citer ceux dans lesquels:

. Ar est un groupe naphtyle;

. $R_1$ représente un radical méthyle ou éthyle;

. les restes cationiques X représentent des cations minéraux dérivés de métaux tels que le lithium, le sodium, le potassium, le calcium, le baryum, des ions ammonium $NH_4^+$; des ions ammonium quaternaire tels que les ions tétraméthylammonium, tétrapropylammonium, tétrabutylammonium.

Parmi ces sels préféré, ceux qui conviennent tout particulièrement bien sont les sels de sodium, de potassium, de calcium, de baryum, d'ammonium, de tétraméthylammonium du produit de condensation, de poids moléculaire compris entre 1500 et 10000, obtenu en condensant avec le formaldéhyde l'acide β-naphtalène sulfonique. Ces sels de produits de condensation, à poids moléculaire élevé, acide β-naphtalène sulfonique/formol sont préparés en appliquant la méthode décrite dans le brevet américain n° 2 141 569.

On peut faire également appel à titre d'agent réducteur d'eau, à un mélange comprenant un sel de produit de condensation à poids moléculaire élevé choisi parmi ceux cités ci-avant, en association avec un sel hydrosoluble dérivé du produit de sulfonation d'hydrocarbures aromatiques polycycliques condensés, répondant à la formule générale:

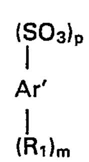

(II)

dans laquelle:

. Ar' représente des groupes aryles polycycliques condensés contenant de 2 à 12 noyaux benzéniques, comme les groupes aryles dérivés des hydrocarbures aromatiques polycycliques condensés visés ci-avant dans la définition du symbole Ar;

. $R_1$, X et m ont les significations données plus haut pour la formule (I);

. p est un nombre entier égal à 1 ou 2.

On fait appel de préférence aux composés de formule (II) dans laquelle:

. Ar' est un groupe naphtyle;

. $R_1$ représente un radical méthyle ou éthyle;

. X est un reste cationique représentant des cations minéraux dérivés du lithium, du sodium, du potassium, du calcium, du baryum, des ions $NH_4^+$; des

ions d'ammonium quaternaire comme les ions tétraméthylammonium, tétrapropylammonium, tétrabutylammonium;

. p est un nombre entier égal à 1.

Les sels de formule (II) peuvent être également des sels simples ou mixtes.

L'acide sulfonique aromatique dont dérivé le sel de formule (II) peut être le même que celui qui sert à la préparation du sel de formule (I) par condensation subséquente avec le formaldéhyde. En pareil cas, le sel de formule (II) peut éventuellement être employé, en tout ou partie, en même temps que le sel de formule (I), sous forme de sous-produit lorsque la réaction de condensation acide sulfonique aromatique/HCHO est incomplète et qu'il reste de l'acide sulfonique aromatique non réagi.

Dans le cas où l'on utilise un mélange comprenant un sel de produit de condensation à poids moléculaire élevé (I) et un sel de produit de sulfonation (II), la proportion pondérale de ce dernier dans le mélange n'excède pas en général 5%.

La solution aqueuse (b) peut renfermer en outre, à côté de l'agent réducteur d'eau, un sel soluble dans l'eau dérivé d'un mono- ou polyacide oxygéné fort minéral ou carboxylique; comme sels qui conviennent, on citera ceux dérivés:

. d'oxyacides minéraux comme les acides nitrique, sulfureux, sulfurique, phosphoreux, orthophosphorique, pyrophosphorique, et chromique;

. d'acides carboxyliques comme les acides cyanoacétique, cyanopropionique, maléique, oxalique, orthonitrobenzoique.

La partie cationique de ces sels n'est pas critique dès l'instant qu'elle satisfait à la condition de solubilité dans l'eau de ces produits; on utilise habituellement les sels alcalins et les sels d'ammonium.

Parmi ces sels, le sulfate de sodium, le nitrate de sodium et l'oxalate de sodium conviennent tout particulièrement bien.

La solution aqueuse (b) renferme en général de 10 à 50% de produit(s) sec(s) (réducteur d'eau + éventuellement sel d'acide minéral ou carboxylique fort). Quand la solution aqueuse (b) renferme un sel d'acide minéral ou carboxylique fort, la proportion pondérale de ce dernier dans le mélange de produits sec représente au plus 25%. La quantité de solution aqueuse (b) représente habituellement de 5 à 90% du poids de l'ensemble mélange des latex (a) + solution aqueuse (b).

Pour la préparation des compositions adjuvantes selon l'invention, l'ordre d'addition des constituants essentiels (a) et (b) n'est pas critique. Les différents modes de mélange industriellement acceptables conviennent bien.

Il convient de noter que les divers ingrédients généralement utilisés dans le domaine de la technique relatif aux liants hydrauliques peuvent être associés sans inconvénient aux compositions conformes à la présente invention soit au moment de leur préparation soit au moment de leur emploi. Parmi ces divers ingrédients, on mentionnera des substances auxiliaires telles que: charges et/ou pigments (limaille de fer, fibres d'amiante, fibres de verre, talc, oxyde de titane, kaolin par exemple); des agents émulsifiants à caractère ionique ou non; des plastifiants (phtalate de dibutyle, phosphate de tricrésyle par exemple); des épaississants (carboxyméthylcellulose, méthylcellulose, éthylcellulose, alginates alcalins et alcalino-terreux par exemple); des agents anti-gels; des agents anti-mousses (produits siliconés; phosphates de dialkyle renfermant 15 à 20 atomes de carbone par exemple); des agents fongicides. Certains de ces substances auxiliaires, notamment les agents émulsifiants et les plastifiants peuvent très bien être présentes en tout ou partie dans les compositions de l'invention à l'état d'additif des latex utilisés.

Les compositions conformes à la présente invention conviennent à toutes les sortes de liants hydrauliques, notamment les ciments, les chaux hydrauliques, les chaux grasses, les chaux artificielles, les mélanges ciments/chaux hydrauliques ou chaux grasses, le plâtre.

Les compositions conformes à l'invention s'appliquent avec un succès particulier aux ciments. L'expression «ciment» désigne toutes les combinaisons chimiques de (chaux + silice + alumine) ou de (chaux + magnésie + silice + alumine + oxyde de fer) couramment connues comme étant des ciments hydrauliques. Les ciments préférés sont les ciments de type Portland dans lesquels le clinker représente au moins 65% du poids; les ajouts éventuels, qui sont au plus de 35% en poids, peuvent être des cendres volantes de centrales thermiques, des pouzzolanes, du laitier de haut fourneau ou des mélanges de ces produits. Lesdits ciments Portland renferment encore en général du sulfate de calcium qui est introduit sous forme de gypse ou d'anhydrite.

Comme autres types de ciments auxquels on peut faire appel, on citera les ciments de laitier constitués de 50 à 80% en poids de laitier et de 50 à 20% en poids de clinker de Portland, tels que par exemple le ciment métallurgique mixte, le ciment de haut fourneau, ou le ciment de laitier au clinker. On peut faire appel encore à des ciments spéciaux comme les ciments à maçonner et les liants à maçonner.

Une des utilisations des compositions qui viennent d'être décrites consiste à les incorporer à titre d'adjuvants dans les mélanges de fabrication de mortiers et bétons destinés à être accrochés sur des matériaux de construction.

Pour la confection des mortiers ou bétons, la nature et la proportion des agrégats (sable, gravier, cailloux) peuvent varier dans de larges limites.

La composition adjuvante selon l'invention peut être introduite avant gâchage dans le liant et les agrégats ou de préférence être introduite dans l'eau de gâchage avant sa mise en oeuvre. La composition adjuvante peut également être introduite dans le mortier ou le béton frais immédiatement avant son emploi. Il doit être entendu que l'expression «eau de gâchage» englobe l'eau qui est apportée par la composition adjuvante.

Le mortier ou béton frais additionné de la composition adjuvante selon l'invention est fixé ensuite sur le matériau de construction à traiter en faisant appel aux différents modes opératoires connus dans ce domaine de la technique.

On peut par exemple déposer directement le mortier ou le béton frais sur le matériau de construction,

ce dernier pouvant être au préalable humidifié par de l'eau.

Un mode opératoire préféré et couramment utilisé consiste à enduire au préalable le matériau de construction à l'aide d'un film mince d'une barbotine d'accrochage. Par barbotine, on entend un mélange constitué par environ 20 à 98% en poids d'une partie aliquote du mortier ou du béton destiné à être accroché et par environ 80 à 2% en poids d'eau. L'expression «film mince» signifie que la barbotine a une épaisseur qui est au plus égale à la dimension de l'agrégat le plus gros présent dans le mortier ou le béton. La quantité de barbotine qui sert à enduire le support est déterminée de manière à satisfaire à ces conditions d'épaisseur. Ensuite, environ 15 à 45 minutes après avoir enduit le support à l'aide de la barbotine, on procède alors à la pose du mortier ou du béton restant.

Un mode opératoire qui convient tout particulièrement bien, parce qu'il permet aux compositions adjuvantes de l'invention de manifester un maximum d'efficacité, consiste à enduire au préalable le matériau de construction à l'aide d'un film mince d'une barbotine enrichie. L'expression «enrichie» signifie que la barbotine renferme en outre une quantité supplémentaire de la composition adjuvante elle-même. On indique donc ici une autre utilisation de la composition adjuvante selon l'invention qui consiste à introduire une certaine quantité de ladite composition dans une barbotine d'accrochage à côté de la partie aliquote de mortier ou béton frais destiné à être accroché et de l'eau qui servent à sa préparation.

Le mortier ou le béton frais dont on vient de parler renferment une certaine quantité de la composition adjuvante; mais on ne sortirait pas du cadre de la présente invention si on partait d'un mortier ou béton frais ne renfermant pas de composition adjuvante et si on utilisait la composition selon l'invention uniquement à titre d'adjuvant de la barbotine mise en oeuvre pour accrocher ledit mortier ou béton frais ne renfermant pas d'adjuvant.

Les compositions adjuvantes qui sont bien adaptées d'une part à la préparation des mortiers et bétons frais destinés à être accrochés sur des matériaux de construction et d'autre part à la préparation des barbotines d'accrochage, sont celles qui renferment en poids:

— 50 à 95% et de préférence 70 à 95% du mélange (a);
— 50 à 5% de préférence 30 à 5% de solution aqueuse (b)

dont la teneur pondérale en produit(s) sec(s) est comprise entre 30 et 50%.

Parmi ces compositions, celles qui sont tout particulièrement bien adaptées sont les compositions adjuvantes dans lesquelles:

— le mélange (a) est un mélange binaire de formule: latex A + latex B (et de préférence de formule: latex A1 + latex B1) ou un mélange ternaire de formule: latex A + latex B + latex C (et de préférence de formule: latex A1 + latex B1 + latex C1) dans lequel le rapport latex A/latex B (ou latex A1/latex B1) est compris entre 3 et 50;

— la solution aqueuse (b) renferme:

. un agent réducteur d'eau qui est choisi: parmi les sels hydrosolubles de produits de condensation, de poids moléculaire compris entre 1500 et 10000, obtenus en condensant avec le formaldéhyde des produits de sulfonation d'hydrocarbures aromatiques, monocycliques ou polycycliques condensés, contenant de 1 à 12 noyaux benzénique; et de préférence parmi les sels de sodium, potassium, calcium, baryum, d'ammonium, de tétraméthylammonium du produit de condensation, de poids moléculaire compris entre 1500 et 10000, obtenu en condensant avec le formaldéhyde l'acide $\beta$ -naphtalène-sulfonique;

— et éventuellement un sel soluble d'acide oxygéné fort choisi: parmi les sels alcalins et d'ammonium dérivés des acides nitrique, sulfureux, sulfurique, phosphoreux, orthophosphorique, pyrophosphorique, chromique, cyanoacétique, cyanopropionique, maléique, oxalique, orthonitrobenzoique; et de préférence parmi le sulfate de sodium, le nitrate de sodium et l'oxalate de sodium.

Dans ce qui suit on désigne par «dose d'emploi» de la composition adjuvante selon l'invention: la quantité nécessaire pour confectionner le mortier ou le béton frais destiné à être accroché (une partie aliquote dudit mortier ou béton pouvant servir le cas échéant à la confection d'une barbotine) + éventuellement la quantité supplémentaire à introduire dans la barbotine, quand on choisit de faire appel à une barbotine enrichie.

Les doses d'emploi de la composition adjuvante selon l'invention, exprimées en pourcentages pondéraux par rapport au poids de liant hydraulique, peuvent varier dans de larges limites. Pour des raisons d'ordre économique, il est souhaitable que les doses d'emploi d'adjuvants organiques de synthèse tels que ceux conformes à la présente invention n'excèdent pas 20% en poids par rapport au poids de liant hydraulique. Ce souhait est satisfait, puisque l'on a trouvé que les compositions selon l'invention peuvent être utilisées avec succès à raison de 2 à 12% en poids par rapport au liant hydraulique.

Quand on utilise la technique de la barbotine enrichie, la quantité de composition adjuvante qui sert à enrichir la barbotine représente au plus 30% du poids de la dose d'emploi de la composition adjuvante.

Quand le mortier ou le béton frais destiné à être accroché ne renferme pas de composition adjuvante et lorsqu'on choisit de faire appel à une barbotine d'accrochage renfermant la composition adjuvante selon l'invention, la quantité de cette dernière qui est utilisée uniquement pour confectionner la barbotine représente au plus 30% du poids du liant hydraulique présent dans la barbotine.

Les compositions selon la présente invention peuvent être utilisées aussi avec succès pour la confection de coulis de liants hydrauliques destinés à la fabrication des sols industriels à base d'enrobés bitumineux ouverts.

Les sols industriels à base d'enrobés bitumineux comprennent deux constituants principaux:

. un enrobé bitumineux qui consiste dans un mélange, préparé à chaud, d'agrégats bien calibrés de granulométrie comprise entre quelques µm et 20 mm avec un bitume d'indice de pénétrabilité compris entre 60 et 100. L'enrobé bitumineux issu de ce mélange présente la particularité de constituer après compactage optimum un volume de matière renfermant environ 10 à 40% de vide sous forme de cellules d'air de formes et de dimensions variables. Cette particularité de structure est à l'origine de la dénomination «enrobé bitumineux ouvert». L'épaisseur moyenne de cette couche est d'environ 20 à 50 mm;

. un coulis de liant hydraulique, généralement un coulis de ciment, qui est déposé, de manière connue en soi, sur cette couche bitumineuse dans le but de remplir au maximum les vides de sa structure cellulaire afin de conférer au sol industriel d'une part un aspect de surface ou «fini» de qualité et d'autre part des propriétés mécaniques améliorées.

Pour remplir correctement son rôle, le coulis doit être fluide et présenter notamment une bonne résistance à l'abrasion et une bonne adhérence sur le support bitumineux. La composition adjuvante selon la présente invention permet de confectionner des coulis pour sols industriels à base d'enrobés bitumineux ouverts qui répondent parfaitement aux demandes des utilisateurs.

On notera que les compositions adjuvantes qui sont bien adaptées à ce type d'utilisation sont celles qui renferment en poids:

- 10 à 50% et de préférence 10 à 40% du mélange (a);
- 90 à 50% et de préférence 90 à 60% de solution aqueuse (b)

dont la teneur pondérale en produit(s) sec(s) est comprise entre 10 et 30%.

Parmi ces compositions, celles qui sont tout particulièrement bien adaptées sont les compositions adjuvantes dans lesquelles le mélange (a) et la solution (b) répondent aux définitions préférentielles indiquées ci-avant dans le cadre de la préparation de mortiers et bétons frais destinés à être accrochés sur des matériaux de construction avec cependant la condition, s'agissant du mélange (a), que le rapport latex A/latex B (ou latex A1/latex B1) est compris entre 0,5 et 10.

Pour la confection du coulis, on fait appel à des agrégats de petites dimensions, notamment du sable de granulométrie comprise entre 0,01 et 0,3 mm.

La composition adjuvante peut être introduite avant gâchage dans le liant et les agrégats ou bien être introduite dans l'eau de gâchage juste avant sa mise en oeuvre. De préférence, la composition adjuvante est introduite dans le coulis après homogénéisation du mélange constitué d'eau, de liant hydraulique et d'agrégats.

L'application du coulis se fait à l'aide d'une raclette et la pénétration dans la couche d'enrobé bitumineux est réalisée avec un appareil connu de l'homme de métier sous la dénomination «rouleau-vibrant». Un appareil qui convient est par exemple le rouleau-vibrant à une bille, ayant une masse de 500 kg, qui est commercialisé par les Sociétés BOOMAG ou RICHIER. Un lissage de finition permet d'enlever l'excès de coulis et de donner au sol un bel aspect de surface.

Les quantités de composition adjuvante selon l'invention, exprimées en pourcentages pondéraux par rapport au liant hydraulique mis en oeuvre pour confectionner le coulis, peuvent varier dans de larges limites. On a trouvé que les compositions selon l'invention peuvent être utilisées avec succès à raison de 1 à 10% en poids par rapport au liant hydraulique.

On ne sortirait pas du cadre de la présente invention si le coulis contenant la composition adjuvante était utilisé encore, après avoir servi à consolider l'enrobé bitumineux, comme sous-couche d'adhérence entre une chappe de mortier ou béton et le sol bitumineux sur lequel est déposé ladite chappe.

Les exemples ci-après, donnés à titre indicatif non limitatif, illustrent l'invention et montrent comment elle peut être mise en pratique. Les exemples 1 à 6 ont trait à des compositions qui sont utilisées pour la confection de mortiers de ciment Portland destinés à être accrochés sur des matériaux de construction. L'exemple 7 a trait à une composition qui est utilisée pour la confection d'un coulis de ciment Portland destiné à servir à la fabrication d'un sol industriel à base d'enrobé bitumineux ouvert.

*Exemples 1 à 3*

1) *Définition des mortiers*

Pour chacun de ces exemples le mortier présente la constitution suivante:

. sable NF.P. 15403 .......................... 1350 g
. ciment Portland ............................... 450 g
. eau

— pour la confection des mortiers témoins (c'est-à-dire sans adjuvant): 202,5 g (E/C = 0,45)

— pour la confection des mortiers renfermant les compositions adjuvantes selon l'invention, le rapport en poids eau/ciment (E/C) est ajusté de manière à conserver la maniabilité du mortier témoin; cet ajustement est opéré par diminution de la quantité d'eau de gâchage.

La confection du mortier a été faite selon la norme NF.P. 15403. Le ciment et le sable sont mélangés à sec selon le dosage indiqué ci-avant, puis l'ensemble du ciment + sable est gâché avec le mélange (formé au préalable) de la composition adjuvante selon l'invention et d'eau.

2) *Définition des tests réalisés*

. *Flow-test ou mesure de la maniabilité du mortier*

Cette caractéristique est mesurée 10 minutes après le gâchage par étalement du mortier que l'on a préalablement moulé dans un tronc de cône de diamètre de base de 8 cm, de diamètre supérieur 7 cm et de hauteur 4 cm. Le mortier est placé sur une table à chocs. On le tasse par piquage manuel de manière connue en soi. Après démoulage, le mortier est soumis à une série de 15 chocs, à raison de un choc par seconde. Le choc est provoqué par une chute du mortier de 15 mm de hauteur. L'étalement est exprimé en centimètres et correspond au diamètre moyen de la galette obtenue après les différents chocs.

. *Mesures des résistances en compression (Rc) et en flexion (Rf)*

Elles sont effectuées selon la norme NF.P. 15451.

Les résistances sont déterminées sur des éprouvettes de dimensions 4 × 4 × 16 cm qui ont été conservées jusqu'à la date de l'essai selon trois types de conditions représentés par les symboles: EH, SEC, et $H_2O$; EH: signifie que les éprouvettes sont conservées à 20 °C dans une étuve à 100% d'humidité relative; SEC: signifie que les éprouvettes sont conservées à 20 °C dans une étuve à 50% d'humidité relative; $H_2O$: signifie que les éprouvettes sont conservées dans l'eau à 20 °C.

Pour la flexion, l'éprouvette est posée sur deux appuis à rouleau de 10 mm de diamètre, distants de 106,7 mm un troisième rouleau de même diamètre équidistant des deux autres transmet une charge que l'on fait croître de 5 déca N/sec. La résistance à la flexion correspondant à la rupture de l'éprouvette est exprimée en bars.

Pour la compression: la mesure s'effectue sur les deux morceaux d'éprouvette issus de la rupture en flexion. La compression est transmise par deux plaques de métal dur d'au moins 10 mm d'épaisseur, 40 mm de largeur et 40 mm de longueur. On fait croître la charge jusqu'à la rupture à une vitesse telle que l'accroissement de contrainte soit de 15 bars/sec. Le résultat est exprimé en bars.

Les chiffres donnés sont la moyenne des résultats de 3 éprouvettes cassées en flexion et donc de 6 mesures en compression.

. *Mesures d'adhérence*

Elles sont réalisées selon le test d'arrachement normalisé par le D.T.U. n° 26.1 (D.T.U. Document Technique Unifié, émanant du Centre Scientifique et Technique du Bâtiment, PARIS).

Les mesures d'adhérence sont effectuées au moyen d'un dynamomètre à soufflet construit par la Société SATTEC, filiale du C.E.B.T.P. (C.E.B.T.P. Centre d'Etudes du Bâtiment et des Travaux Publics, PARIS).

Chaque éprouvette soumise aux mesures d'adhérence est confectionnée en déposant le mortier, préparé comme indiqué ci-avant à partir de 450 g de ciment, sur un support de comblanchien de dimensions 30 × 30 cm (surface: 900 $cm^2$). A noter que dans tous les cas le support de comblanchien est enduit, environ 30 mm avant le dépôt du mortier, d'un film d'une barbotine comprenant:

. dans le cas d'un essai témoin: 150 g d'une partie aliquote du mortier (sans adjuvant) à déposer et 18 g d'eau;

. dans le cas d'un essai conforme à l'invention: 150 g d'une partie aliquote du mortier (additionné de la composition adjuvante) à déposer, 18 g d'eau et une quantité supplémentaire de la composition adjuvante elle-même.

L'éprouvette est confectionnée et conservée à 20 °C dans une enceinte à 50% d'humudité relative.

Il est fait par surface d'éprouvette, 9 carrotages circulaires d'un diamètre de 5 cm (surface: 20 $cm^2$) traversant tout l'épaisseur du mortier (1 cm environ) jusqu'au support, en des points répartis de manière à être équidistants les uns des autres. L'essai consiste à arracher les parties cylindriques découpées en leur appliquant un effort de traction perpendiculaire au plan de l'éprouvette.

A cet effet, on colle sur chaque partie découpée une pastille métallique du même diamètre et de 1 cm d'épaisseur et sur cette pastille on applique l'effort, suivant son axe, avec l'appareil construit par la Société SATTEC. La norme NF.P. 30062 définit ce procédé d'arrachement par traction.

On obtient la valeur de l'adhérence du mortier sur son support si la rupture a lieu suivant leur plan de contact. Mais il peut arriver que la rupture ait lieu suivant un plan situé soit dans le mortier, soit dans le support ou bien encore en partie dans le plan de contact et dans le mortier ou le support. Dans les deux premiers cas, la valeur obtenue est la résistance du mortier ou du support, et dans le troisième cas, la valeur obtenue n'a pas un sens précis mais elle indique que la résistance en traction du mortier ou du support est du même ordre que l'adhérence et en donne une valeur moyenne.

Dans tous les cas, la valeur obtenue représente cependant une valeur minimale pour l'adhérence.

Les colles utilisées pour le collage des pastilles sont des colles époxy comme l'araldite qui conviennent dans tous les cas de mortier et dont le temps de durcissement à la température de 20 °C est de 24 heures.

On effectue le collage des pastilles métalliques au bout de 21 jours. Le taux d'adhérence du mortier au support est déterminé: dans une première série de mesures, après conservation de l'éprouvette 28 jours à 20 °C dans 50% d'humidité relative (SEC); et dans une deuxième série de mesures, après conservation de l'éprouvette 28 jours à 20 °C dans 50% d'humidité relative + 7 jours dans l'eau à 20 °C ($H_2O$). Le taux d'adhérence est la moyenne arithmétique des taux d'adhérence constatés pour chaque cylindre de mortier découpé dans l'éprouvette.

Pour qu'un mortier soit considéré comme un mortier adhérent, aucun résultat ne devra être inférieur à 3 bars à 28 jours (SEC) comme à 28 jours + 7 jours dans l'eau ($H_2O$).

. *Mesures de retrait et de gonflement*

Elles sont définies par la norme NF.P. 15433. On mesure en fonction du temps les variations de longueur d'éprouvettes de mortier de dimensions 4 × 4 × 16 cm conservées, après démoulage, pendant 90 jours: dans l'air à 50% d'humidité relative et à 20 °C pour l'essai de retrait; dans l'eau à 20 °C pour l'essai de gonflement. Les variations sont exprimées en µm/mètre.

. *Mesures de l'air occlus (air entraîné)*

On mesure au bout de 24 heures le poids des éprouvettes de dimensions 4 × 4 × 16 cm confectionnées: avec le mortier témoin et avec le mortier additionné de la composition selon l'invention; la quantité d'air occlus, exprimée en pourcentage, est donnée par la formule:

$$100 \times \frac{\text{Poids éprouvette témoin - poids éprouvette à tester}}{\text{Poids éprouvette témoin}}$$

3) *Définition des compositions adjuvantes mises en oeuvre*

3.1) Dans la réalisation de ces exemples, on a utilisé:

. un mélange de latex (a) de formule: latex A1 + latex B1 dans laquelle:

— le latex A1 consiste dans une dispersion aqueuse à 50% en poids d'un copolymère styrène/acrylate de n-butyle; la température de transition vitreuse est de 16°C et le diamètre des particules: environ 0,1 µm; le pH de la dispersion est d'environ 5; la viscosité mesurée au viscosimètre BROOKFIELD RVT à 23°C et à 50 t/mn est de 500 mPa.s. (latex A2);

— le latex B1 consiste dans une dispersion aqueuse à 50% en poids d'un copolymère styrène/butadiène-1,3; la température minimale de formation du film est inférieure à 0°C et le diamètre des particules est d'environ 0,16 µm; le pH de la dispersion est d'environ 7; la viscosité mesurée au viscosimètre BROOKFIELD RVT à 23°C et à 50 t/mn est de 80 mPa.s. (latex B2);

. une solution aqueuse (b) titrant 40% en poids du sel de sodium du produit de condensation acide β -naphtalène sulfonique/formol, ayant un poids moléculaire moyen de 4980 g. La préparation de cette solution aqueuse de polyméthylène naphtalène sulfonate de sodium (en abréviation: solution de PNS-Na) est opérée de la manière suivante:

Dans un ballon de 3 litres, équipé d'une agitation mécanique et d'un système de chauffage, on introduit 640 g (6,5 moles) d'acide sulfurique concentré (d = 1,84) que l'on porte à une température de 160°C. L'agitation est mise en route et on charge lentement 640 g (5 moles) de naphtalène purifié, la température étant maintenue à la valeur précitée.

Une fois l'addition de naphtalène achevée, la masse réactionnelle est agitée à 160°C, jusqu'à ce que tout le naphtalène engagé ait réagi; la durée nécessaire est d'environ 4 heures.

Le milieu de sulfonation est ensuite mis à refroidir jusqu'à 100°C et dilué ensuite avec 282 g d'eau. La température du milieu est portée à 80°C et l'on ajoute alors 76,8 g d'une solution aqueuse de formaldéhyde à 40% en poids de HCHO. Le mélange réactionnel est agité ainsi à 80°C pendant une heure.

Au bout de ce temps, on introduit à nouveau dans le milieu de réaction 76,8 g de la solution aqueuse de formaldéhyde et on continue à agiter à 80°C pendant une heure. Ce type d'opérations est répété encore deux autres fois.

Après que la totalité de la solution de formaldéhyde (307,2 g) ait été chargée, la température de la masse réactionnelle est augmentée progressivement à 95-100°C sur une période de 1 heure environ. Une fois cette température atteinte, la masse réactionnelle est maintenue sous agitation pendant 18 heures encore.

Au bout de ce temps, on refroidit à température ambiante (25°C) et dose par potentiomètrie les acidités sulfurique (correspond à 1,5 mole d'acide sulfurique) et sulfonique (correspond à 5 Moles d'acide sulfonique). Le milieu de réaction est ensuite neutralisé exactement avec un mélange aqueux comprenant: 111,15 g de $Ca(OH)_2$ et 200 g de NaOH. La chaux neutralise l'acidité sulfurique et donne un précipité de sulfate de calcium hydraté qui est séparé par filtration. Quant à la solution de filtration, elle renferme le polyméthylène naphtalène sulfonate de sodium désiré; le filtrat est soumis à une concentration de manière à isoler une solution aqueuse titrant 40% en poids de polyméthylène naphtalène sulfonate de sodium pur.

3.2) *Formulations*

On a préparé les compositions suivantes:

| EXEMPLES | MELANGE (a) Latex A2 % | MELANGE (a) Latex B2 % | Solution (b) de PNS-Na % |
|---|---|---|---|
| 1 | 64 | 18 | 18 |
| 2 | 80 | 10 | 10 |
| 3 | 75 | 5 | 20 |

Les pourcentages sont donnés en poids.

4) *Essai de mortiers et résultats*

Dans chacun des exemples 1 à 3, les tests sont faits avec un mortier confectionné à partir de 450 g de ciment Portland artificiel type CPA-400 GUERVILLE, en employant la composition adjuvante selon l'invention à raison de 5% en poids par rapport au ciment (22,5 g).

Pour le test d'adhérence, on utilise, comme il est indiqué ci-avant, une barbotine enrichie renfermant une quantité supplémentaire de 6 g de composition adjuvante. Pour réaliser ce test, la composition adjuvante selon l'invention est donc employée globalement à raison de 6,3% en poids par rapport au ciment. La quantité de composition adjuvante (6 g) qui sert à enrichir la barbotine représente 21% du poids de la dose d'emploi (28,5 g) de la composition adjuvante.

A titre comparatif, un essai de mortier a été réalisé sur un mortier exempt d'adjuvant (mortier témoin: essai A).

Les résultats sont rassemblés dans le tableau qui suit:

| Exemple et Essai | GACHAGE E/C | GACHAGE Etalement en cm | GACHAGE Réduction $H_2O$ % | 24 h Rc EH | 24 h Rf EH | 28 jours Rc Sec | 28 jours Rc $H_2O$ | 28 jours Rf Sec | 28 jours Rf $H_2O$ | 90 jours Rc $H_2O$ | 90 jours Rf $H_2O$ | Adhérence (en bars) Sec | Adhérence (en bars) $H_2O$ | Retrait µ/m | Gonflement µ/m | Air occlus % |
|---|---|---|---|---|---|---|---|---|---|---|---|---|---|---|---|---|
| Essai A Témoin | 0,45 | 11,5 | 0 | 200 | 45 | 506 | 582 | 80 | 78 | 650 | 85 | 0 | 0 | −660 | +130 | 0 |
| Ex. 1 | 0,39 | 10 | 13 | 313 +57% | 58 +29% | 504 0% | 622 +7% | 93 +16% | 75 −4% | 668 +3% | 83 −2% | 9 | 12 | −820 | +150 | 0 |
| Ex. 2 | 0,39 | 10,2 | 13 | 282 +41% | 57 +27% | 634 +25% | 653 +12% | 95 +19% | 80 +3% | 693 +7% | 91 +7% | 11 | 13 | −660 | +135 | 0 |
| Ex. 3 | 0,39 | 10,1 | 13 | 294 +47% | 57 +27% | 646 +28% | 656 +13% | 95 +19% | 80 +3% | 657 +1% | 80 −6% | 7 | 16 | −900 | +130 | 0 |

*Exemples 4 à 6*

Dans la réalisation de ces exemples, on a utilisé:

. un mélange de latex (a) de formule: latex A1 + latex B1 + latex C1 dans laquelle;

— le latex A1 a la signification du latex A2 employé dans les exemples 1 à 3;

— le latex B1 a la signification du latex B2 employé dans les exemples 1 à 3;

— le latex C1 consiste dans une dispersion aqueuse à 50% en poids d'un homopolymère d'acétate de vinyle; la température minimale de formation du film est de 2°C et le diamètre des particules d'environ 1 à 3 µm; le pH de la dispersion est d'environ 4,5; la viscosité mesurée au viscosimètre BROOKFIELD RVT à 23°C et à 50 t/mn est de 1500 mPa.s. (latex C2);

. la solution aqueuse (b) de PNS-Na utilisée aux exemples 1 à 3.

1) *Formulations*

On a préparé les compositions suivantes:

| EXEMPLES | MELANGE (a) Latex A2 % | MELANGE (a) Latex B2 % | MELANGE (a) Latex C2 % | SOLUTION (b) de PNS-Na % |
|---|---|---|---|---|
| 4 | 65 | 10 | 5 | 20 |
| 5 | 63 | 10 | 10 | 17 |
| 6 | 60 | 10 | 15 | 15 |

2) *Essais de mortiers et résultats*

On opère dans les mêmes conditions qu'aux exemples 1 à 3. Le mortier témoin est celui de l'essai A précédent.

Les résultats sont rassemblés dans le tableau qui suit:

| Exemple et Essai | GACHAGE E/C | GACHAGE Etalement en cm | GACHAGE Réduction $H_2O$ % | 24 h Rc EH | 24 h Rf EH | 28 jours Rc Sec | 28 jours Rc $H_2O$ | 28 jours Rf Sec | 28 jours Rf $H_2O$ | 90 jours Rc $H_2O$ | 90 jours Rf $H_2O$ | Adhérence (en bars) Sec | Adhérence (en bars) $H_2O$ | Retrait µ/m | Gonflement µ/m | Air occlus % |
|---|---|---|---|---|---|---|---|---|---|---|---|---|---|---|---|---|
| Essai A Témoin | 0,45 | 11,5 | 0 | 200 | 45 | 506 | 582 | 80 | 78 | 650 | 85 | 0 | 0 | −660 | +130 | 0 |
| Ex. 4 | 0,39 | 11 | 13 | 291 +46% | 54 +20% | 565 12% | 579 −1% | 106 +33% | 80 +3% | 681 +5% | 81 −5% | 12 | 15 | −870 | + 20 | 0 |
| Ex. 5 | 0,39 | 11 | 13 | 269 +34% | 51 +13% | 559 +10% | 575 −2% | 94 +18% | 78 0% | 669 +3% | 81 −5% | 12 | 14 | −1000 | +110 | 0 |
| Ex. 6 | 0,39 | 11 | 13 | 272 +36% | 53 +18% | 582 +15% | 588 +1% | 100 +25% | 78 0% | 642 − 1% | 84 −1% | 8 | 10 | −750 | +150 | 0 |

*Exemple 7*

1) *Définition du coulis*

Il présente la constitution suivante:

. sable normalisé F1 (granulométrie comprise entre 0,06 et 0,3 mm) 50 parts en poids

. ciment Portland type CPA-400 HTS commercialisé par la Société LAFARGE 50 parts en poids

. eau

— pour confection du coulis témoin (sans adjuvant) 30 parts en poids

— pour confection du coulis avec adjuvant la quantité d'eau étant ajustée de manière à conserver la maniabilité du coulis témoin; cet ajustement est opéré par diminution de la quantité d'eau de gâchage.

La confection du coulis est réalisée à l'aide d'un malaxeur-pompe vendu dans le commerce sous la

dénomination PUTZMEISTER P13; on charge dans cet appareil et dans l'ordre suivant: l'eau, puis le ciment et le sable. La composition adjuvante est chargée ensuite après homogénéisation du mélange précédent. Une fois préparé, le coulis peut être transporté par pompage jusqu'à son lieu d'application grâce à l'appareil précité.

2) *Définition des tests réalisés*

. *Mesure de la maniabilité (ou fluidité) du coulis*

Cette caractéristique du coulis de ciment est mesurée à l'aide du cône de MARSH. Ses caractéristiques dimensionnelles sont les suivantes: capacité totale: 1 litre; ajutage de vidange: diamètre de 5 mm et longueur de 50 mm. On remplit à 20°C le cône avec le coulis frais et on mesure le temps en seconde qui est nécessaire pour vidanger complètement le cône (par exemple avec de l'eau, on a un temps d'écoulement de 32 secondes).

. *Mesures de la résistance à l'abrasion du coulis*

Cette mesure est effectuée à l'aide de l'appareil SCHOKKE. Le test consiste à soumettre une éprouvette parallélipipédique de coulis, de 7 jours d'âge, à une action combinée de brossage longitudinal et rotatif à sec. La brosse est constituée de filaments d'acier inoxydable. Les dimensions de l'éprouvette sont les suivantes: 15 × 10 × 1 cm. On mesure la perte de poids de l'éprouvette au bout des temps suivants: 30 secondes, 1 minute, 3 minutes et 10 minutes. Plus la perte de poids est faible, meilleure est la résistance à l'abrasion. La perte de poids est exprimée en pourcentages.

. *Mesure de la résistance au poinçonnement du sol industriel*

Le sol industriel qui est testé ici est fabriqué par application du coulis de ciment, comme il est indiqué ci-avant dans la description, sur un enrobé bitumineux préparé par la Société Chimique de La Route, présentant les particularités suivantes

— il est préparé par un mélange à chaud d'agrégats de granulométrie comprise entre quelques µm et 14 mm avec un bitume d'indice de pénétrabilité 60/70;

— il présente un pourcentage de vide d'environ 30%

— il présente, une fois déposé, une épaisseur moyenne de 35 mm.

La mesure de résistance au poinçonnement est effectuée au bout de 7 jours à l'aide de l'appareil conçu par les Sociétés Chimiques de La Route et Sacer qui consiste en un disque métallique de 5 $cm^2$ de surface chargé par un poids variable de quelques kg à 350 kg et déposé sur le sol industriel. La résistance est exprimée en bar et elle est calculée directement à partir de la valeur du poids qui entraine au bout de 3 heures à 25°C, un enfoncement de 1 mm au maximum du sol industriel.

3) *Définition de la composition adjuvante*

On a utilisé:

. un mélange de latex (a) de formule: latex A1 + latex B1 dans laquelle:

— le latex A1 a la signification du latex A2 employé dans les exemples 1 à 3;

— le latex B1 a la signification du latex B2 employé dans les exemples 1 à 3;

. une solution aqueuse (b) renfermant 20% en poids d'un mélange de sel de sodium du produit de condensation acide β -naphtalène sulfonique/formol de poids moléculaire moyen de 4980 g (82%) avec du sulfate disodique (18%).

La préparation de cette solution aqueuse (b) est opérée de la manière suivante

— pour les étapes de sulfonation du naphtalène et de condensation avec le formaldéhyde on reprend le mode opératoire décrit ci-avant avec les exemples 1 à 3;

— mais on procède en fin de réaction à une neutralisation exacte du milieu par de la soude uniquement;

— le milieu de neutralisation est soumis ensuite à une concentration de manière à isoler une solution aqueuse titrant 40% en poids d'un mélange de polyméthylène naphtalène sulfonate de sodium et de $Na_2SO_4$. Ce concentrat est ensuite dilué avec son volume d'eau pour obtenir la solution aqueuse (b) mise en oeuvre dans cet exemple.

La composition suivante a été préparée:

. Mélange (a)

— latex A2 ............................ 9,5% en poids

— latex B2 ............................ 9,5% en poids

. solution aqueuse (b) ............... 81% en poids

4) *Essais de coulis et résultats*

Cet essai est fait avec un coulis préparé comme il est indiqué ci-avant dans le paragraphe 1) dans lequel on introduit 2 parts en poids de la composition adjuvante précitée (4% en poids par rapport au ciment) et 25,5 parts en poids d'eau.

A titre comparatif, un essai de coulis a été réalisé avec un coulis exempt de composition adjuvante (essai témoin A').

| Exemple et Essai | FLUIDITE Initiale | FLUIDITE Après 45 mn | ABRASION 30 sec | ABRASION 1 mn | ABRASION 3 mn | ABRASION 10 mn | Résistance au Poinçonnement |
|---|---|---|---|---|---|---|---|
| Essai A' | 1 mn 25 sec | 1 mn 25 sec | 0,7% | 1,7% | 7% | 21% | 40 bars |
| Ex. 7 | 1 mn 30 sec | 1 mn 34 sec | 0,5% | 0,6% | 0,9% | 1,7% | 60 bars |

**Revendications pour les Etats contractants:**
BE, CH, DE, FR, GB, IT, LI, NL, SE

1. Compositions utilisables notamment comme adjuvants des mélanges à base de liants hydrauliques, caractérisées en ce qu'elles comprennent à titre de constituants essentiels:

(a) un mélange d'au moins deux dispersions aqueuses de polymères vinyliques différents, choisies dans au moins deux des groupes formés par:

— les latex (désignés par: latex A) qui résultent de la copolymérisation d'un monomère du type hydrocarbure aromatique comportant de 8 à 14 atomes de carbone et une ou deux liaisons à caractère éthylénique avec un monomère de type acrylique ou méthacrylique qui peut être un acide, un ester de cet acide avec des alcools aliphatiques ou cycloaliphatiques saturés ayant jusqu'à 8 atomes de carbone, ou un nitrile, un amide, un anhydride, dérivé de cet acide;

— les latex (désignés par: latex B) qui résultent de la copolymérisation d'un monomère de type hydrocarbure aromatique comportant de 8 à 14 atomes de carbone et une ou deux liaisons à caractère éthylénique avec un monomère du type hydrocarbure aliphatique diéthylénique comportant de 4 à 14 atomes de carbone;

— les latex (désignés par: latex C) qui résultent de l'homopolymérisation d'un monomère choisi dans le groupe des esters vinyliques d'acides aliphatiques saturés ou d'acides aromatiques ayant jusqu'à 10 atomes de carbone;

— les latex (désignés par: latex D) qui résultent de la copolymérisation d'au moins deux esters vinyliques choisis parmi ceux cités pour le latex C;

(b) une solution aqueuse renfermant soit un agent réducteur d'eau, soit un mélange d'un agent réducteur d'eau avec un sel soluble dans l'eau dérivé d'un mono- ou polyacide oxygéné, minéral ou carboxylique, dont l'une au moins des fonctions acides possède une constante d'ionisation pKa dans l'eau à 25°C inférieure à 2,5.

2. Compositions selon la revendication 1, caractérisées en ce que le mélange (a) de latex est un mélange binaire de formule: latex A + latex B, dans laquelle les latex A et B ont les significations données dans la revendication 1.

3. Compositions selon la revendication 1, caractérisées en ce que le mélange (a) de latex est un mélange ternaire de formule: latex A + latex B + latex C dans laquelle les latex A, B et C ont les significations données dans la revendication 1.

4. Compositions selon la revendication 2, caractérisées en ce que la quantité de latex A, dans le mélange latex A + latex B exprimée par le rapport pondéral latex A/latex B, est comprise entre 0,5 et 50.

5. Compositions selon la revendication 3, caractérisées en ce que le rapport pondéral latex A/latex B a la valeur donnée dans la revendication 4 et que la quantité de latex C représente jusqu'à 30% du poids du mélange latex A + latex B + latex C.

6. Compositions selon l'une quelconque des revendications 1 à 5, caractérisées en ce que l'agent réducteur d'eau est constitué par les sels hydrosolubles de produits de condensation, de poids moléculaire compris entre 1500 et 10000, obtenus en condensant avec le formaldéhyde des produits de sulfonation d'hydrocarbures aromatiques monocycliques ou polycycliques condensés contenant de 1 à 12 noyaux benzéniques, ou par le mélange desdits sels avec des sels hydrosolubles dérivés des produits de sulfonation d'hydrocarbures aromatiques polycycliques condensés contenant de 2 à 12 noyaux benzéniques.

7. Compositions selon l'une quelconque des revendications 1 à 6, caractérisées en ce que le sel d'acide oxygéné minéral ou carboxylique qui peut être introduit dans la solution aqueuse (b) à côté de l'agent réducteur d'eau est choisi dans le groupe formé par les sels alcalins et les sels d'ammonium dérivés des acides nitrique, sulfureux, sulfurique, phosphoreux, orthophosphorique, pyrophosphorique, chromique, cyanoacétique, cyanopropionique, maléique, oxalique et orthonitrobenzoique.

8. Compositions selon l'une quelconque des revendications 1 à 7, caractérisées en ce qu'elles renferment en poids:

— 10 à 95% du mélange (a) d'au moins deux latex;

— 90 à 5% de la solution aqueuse (b).

9. Compositions selon l'une quelconque des revendications 1 à 8, caractérisées en ce que les latex renferment de 30 à 60% de polymère sec.

10. Compositions selon l'une quelconque des revendications 1 à 9, caractérisées en ce que la solution aqueuse (b) renferme de 10 à 50% de produit(s) sec(s).

11. Compositions selon la revendication 10, caractérisées en ce que la proportion pondérale du sel soluble d'acide minéral ou carboxylique dans le mélange des produits secs (agent réducteur d'eau + sel d'acide minéral ou carboxylique) représente au plus 25%.

12. Utilisation des compositions selon l'une quelconque des revendications 1 à 11 comme adjuvants à incorporer dans les mélanges de fabrication de mortiers et bétons de liants hydrauliques destinés à être accrochés sur des matériaux de construction.

13. Utilisation des compositions selon l'une quelconque des revendications 1 à 11 comme adjuvants à incorporer dans les barbotines d'accrochage de mortiers et bétons frais de liants hydrauliques sur des matériaux de construction.

14. Utilisation selon les revendications 12 et 13, caractérisée en ce qu'elle consiste à enchaîner les opérations suivantes:

(α) on prépare un mortier ou un béton frais contenant la composition adjuvante;

(β) on enduit le matériau de construction à l'aide d'un film mince d'une barbotine d'accrochage enrichie renfermant une partie aliquote du mortier ou béton préparé sous ( ), de l'eau et une quantité supplémentaire de composition adjuvante;

(γ) on procède ensuite, 15 à 45 minutes après avoir enduit le support à l'aide de la barbotine enrichie, à la pose du mortier ou du béton restant.

15. Utilisation selon l'une quelconque des revendications 12 à 14, caractérisée en ce que les compositions adjuvantes renferment en poids:

— 50 à 95% du mélange (a),

— 50 à 5% de solution aqueuse (b) dont la teneur pondérale en produit(s) sec(s) est comprise entre 30 et 50%.

16. Utilisation selon l'une quelconque des revendications 12, 14 et 15, caractérisée en ce que la dose d'emploi de la composition adjuvante est comprise entre 2 et 12% en poids par rapport au liant hydraulique.

17. Utilisation des compositions selon l'une quelconque des revendications 1 à 11 comme adjuvants à incorporer dans les mélanges de fabrication de coulis de liants hydrauliques destinés à la confection de sols industriels à base d'enrobé bitumineux ouverts.

18. Utilisation selon la revendication 17, caractérisée en ce que les compositions adjuvantes renferment en poids:

— 10 à 50% du mélange (a),

— 90 à 50% de solution aqueuse (b) dont la teneur pondérale en produit(s) sec(s) est comprise entre 10 et 30%.

19. Utilisation selon l'une quelconque des revendications 17 et 18, caractérisée en ce que la dose d'emploi de la composition adjuvante est comprise entre 1 et 10% en poids par rapport au liant hydraulique.

20. Utilisation selon l'une quelconque des revendications 12 à 19, caractérisée en ce que le liant hydraulique est un ciment.

**Revendications pour l'Etat contractant:**
AT

1. Emploi d'une composition obtenue par mélange de:

(a) 10 à 95% en poids d'au moins deux dispersions aqueuses de polymères vinyliques différents, contenant 30 à 60% de polymères sec, choisies dans au moins deux des groupes formés par:

— les latex (désignés par: latex A) qui résultent de la copolymérisation d'un monomère du type hydrocarbure aromatique comportant de 2 à 14 atomes de carbone et une ou deux liaisons à caractère éthylénique avec un monomère de type acrylique ou méthacrylique qui peut être un acide, un ester de cet acide avec des alcools aliphatiques ou cycloaliphatiques saturés ayant jusqu'à 8 atomes de carbone, ou un nitrile, un amide, un anhydride, dérivé de cet acide;

— les latex (désignés par: latex B) qui résultent de la copolymérisation d'un monomère de type hydrocarbure aromatique comportant de 8 à 14 atomes de carbone et une ou deux liaisons à caractère éthylénique avec un monomère du type hydrocarbure aliphatique diéthylénique comportant de 4 à 14 atomes de carbone,

— les latex (désignés par: latex C) qui résultent de l'homopolymérisation d'un monomère choisi dans le groupe des esters vinyliques d'acides aliphatiques saturés ou d'acides aromatiques ayant jusqu'à 10 atomes de carbone,

— les latex (désignés par: latex D) qui résultent de la copolymérisation d'au moins deux esters vinyliques choisis parmi ceux cités pour le latex C,

(b) 90 à 5% en poids d'une solution aqueuse à 10-50% renfermant soit un agent réducteur d'eau, soit un mélange d'un agent réducteur d'eau avec un sel soluble dans l'eau dérivé d'un mono- ou polyacide oxygéné, minéral ou carboxylique, dont l'une au moins des fonctions acides possède une constante d'ionisation pKa dans l'eau à 25°C inférieure à 2,5, comme adjuvant à incorporer dans les mélanges à base de liants hydrauliques.

2. Emploi de la composition obtenue selon la revendication 1, dans laquelle le mélange (a) de latex est un mélange binaire de formule: latex A + latex B, ayant les significations données dans la revendication 1, pour le but indiqué dans la revendication 1.

3. Emploi de la composition obtenue selon la revendication 1, dans laquelle le mélange (a) de latex est un mélange ternaire de formule: latex A + latex B + latex C ayant les significations données dans la revendication 1 pour le but indiqué dans la revendication 1.

4. Emploi de la composition obtenue selon la revendication 2, dans laquelle la quantité de latex A, dans le mélange latex A + latex B, exprimée par le rapport pondéral latex A/latex B, est comprise entre 0,5 et 50, pour le but indiqué dans la revendication 1.

5. Emploi de la composition obtenue selon la revendication 3, dans laquelle le rapport pondéral latex A/latex B est compris entre 0,5 et 50 et la quantité de latex C représente jusqu'à 30% du poids du mélange latex A + latex B + latex C, pour le but indiqué dans la revendication 1.

6. Emploi de la composition obtenue selon l'une quelconque des revendications 1 à 5, dans laquelle l'agent réducteur d'eau est constitué par les sels hydrosolubles de produits de condensation, de poids moléculaire compris entre 1500 et 10000, obtenus en condensant avec le formaldéhyde des produits de sulfonation d'hydrocarbures aromatiques monocycliques ou polycycliques condensés contenant de 1 à 12 noyaux benzéniques, ou par le mélange desdits sels avec des sels hydrosolubles dérivés des produits de sulfonation d'hydrocarbures aromatiques polycycliques condensés contenant de 2 à 12 noyaux benzéniques, pour le but indiqué dans la revendication 1.

7. Emploi de la composition obtenue selon l'une quelconque des revendications 1 à 6, contenant 50 à 95% du mélange (a) et 50 à 5% de la solution aqueuse (b) comme adjuvants à incorporer dans les mélanges de fabrication de mortiers et bétons de liants hydrauliques destinés à être accrochés sur des matériaux de construction, et les barbotines d'accrochages de mortiers et bétons frais, en quantité comprise entre 2 et 12% en poids par rapport au liant hydraulique.

8. Emploi de la composition obtenue selon la revendication 7, caractérisé en ce qu'elle consiste à enchaîner les opérations suivantes:

($\alpha$) on prépare un mortier ou un béton frais contenant la composition adjuvante;

($\beta$) on enduit le matériau de construction à l'aide d'un film mince d'une barbotine d'accrochage enrichie renfermant une partie aliquote du mortier ou béton préparé sous ($\alpha$), de l'eau et une quantité supplémentaire de composition adjuvante;

($\gamma$) on procède ensuite, 15 à 45 minutes après

avoir enduit le support à l'aide de la barbotine enrichie, à la pose du mortier ou du béton restant.

9. Emploi de la composition obtenue selon l'une quelconque des revendications 1 à 6, contenant 10 à 50% du mélange (a) et 90 à 50% de la solution aqueuse (b) ayant une teneur pondérale en produits secs comprise entre 10 et 30% comme adjuvants à incorporer dans les mélanges de fabrication de coulis de liants hydrauliques destinés à la confection de sols industriels à base d'enrobé bitumineux ouverts, en quantité comprise entre 1 et 10% par rapport au liant hydraulique.

**Claims for the contracting States:**
BE, CH, LI, DE, FR, GB, IT, NL, SE

1. Compositions which can be used in particular as adjuvants for mixtures based on hydraulic binders, characterised in that they comprise, by way of essential constituents:

(a) a mixture of at least two aqueous dispersions of different vinyl polymers, chosen from at least two of the groups comprising:

— the latices (designated by: latices A) which result from the copolymerisation of a monomer of the aromatic hydrocarbon type, containing from 8 to 14 carbon atoms and one or two bonds of ethylenic character, with a monomer of the acrylic or methacrylic type, which can be an acid, an ester of this acid with saturated aliphatic or cycloaliphatic alcohols having up to 8 carbon atoms, or a nitrile, an amide or an anhydride derived from this acid;

— the latices (designated by: latices B) which result from the copolymerisation of a monomer of the aromatic hydrocarbon type, containing from 8 to 14 carbon atoms and one or two bonds of ethylenic character, with a monomer of the diethylenic aliphatic hydrocarbon type, containing from 4 to 14 carbon atoms;

— the latices (designated by: latices C) which result from the homopolymerisation of a monomer chosen from the group comprising the vinyl esters of saturated aliphatic acids or of aromatic acids having up to 10 carbon atoms; and

— the latices (designated by: latices D) which result from the copolymerisation of at least two vinyl esters chosen from amongst those mentioned for the latex C; and

(b) an aqueous solution containing either a water-reducing agent or a mixture of a water-reducing agent with a water-soluble salt derived from an oxygen-containing, mineral or carboxylic monoacid or polyacid, at least one of the acid groups of which has an ionisation constant pKa, in water at 25°C, of less than 2.5.

2. Compositions according to claim 1, characterised in that the latex mixture (a) is a binary mixture of the formula: latex A + latex B, in which the latices A and B have the meanings given in claim 1.

3. Compositions according to claim 1, characterised in that the latex mixture (a) is a ternary mixture of the formula: latex A + latex B + latex C, in which the latices A, B and C have the meanings given in claim 1.

4. Compositions according to claim 2, characterised in that the amount of latex A in the mixture of latex A + latex B, expressed as the weight ratio latex A/latex B, is between 0.5 and 50.

5. Compositions according to claim 3, characterised in that the weight ratio latex A/latex B has the value given in claim 4, and in that the amount of latex C represents up to 30% of the weight of the mixture of latex A + latex B + latex C.

6. Compositions according to any one of claims 1 to 5, characterised in that the water-reducing agent consists of the water-soluble salts of condensation products, having a molecular weight of between 1500 and 10000, obtained by condensing, with formaldehyde, products resulting from the sulphonation of monocyclic or fused polycyclic aromatic hydrocarbons containing from 1 to 12 benzene nuclei, or of a mixture of the said salts with water-soluble salts derived from the products resulting from the sulphonation of fused polycyclic aromatic hydrocarbons containing from 2 to 12 benzene nuclei.

7. Compositions according to any one of claims 1 to 6, characterised in that the salt of an oxygen-containing, mineral or carboxylic acid which can be introduced into the aqueous solution (b), in addition to the water-reducing agent, is chosen from the group comprising the alkali metal salts and the ammonium salts derived from nitric, sulphurous, sulphuric, phosphorous, orthophosphoric, pyrophosphoric, chromic, cyanoacetic, cyanopropionic, maleic, oxalic and ortho-nitrobenzoic acids.

8. Compositions according to any one of claims 1 to 7, characterised in that they contain, by weight:

— 10 to 95% of the mixture (a) of at least two latices; and

— 90 to 5% of the aqueous solution (b).

9. Compositions according to any one of claims 1 to 8, characterised in that the latices contain from 30 to 60% of dry polymer.

10. Compositions according to any one of claims 1 to 9, characterised in that the aqueous solution (b) contains from 10 to 50% of dry product(s).

11. Compositions according to claim 10, characterised in that the proportion by weight of the soluble salt of a mineral or carboxylic acid in the mixture of the dry products (water-reducing agent + salt of mineral or carboxylic acid) represents at most 25%.

12. Use of the compositions according to any one of claims 1 to 11 as adjuvants to be incorporated into mixtures for the manufacture of mortars and concretes, based on hydraulic binders, which are to be bonded to construction materials.

13. Use of the compositions according to any one of claims 1 to 11 as adjuvants to be incorporated into slops for bonding fresh mortars and concretes, based on hydraulic binders, to construction materials.

14. Use according to claims 12 and 13, characterised in that it consists in carrying out the following operations in succession:

( ) a fresh mortar or concrete containing the adjuvant composition is prepared;

( ) the construction material is coated with a thin film of an enriched bonding slop containing an

aliquot of the mortar or concrete prepared under ( ), water and an additional amount of adjuvant composition; and

( ) 15 to 45 minutes after the substrate has been coated with the enriched slop, the remaining mortar or concrete is then applied.

15. Use according to any one of claims 12 to 14, characterised in that the adjuvant compositions contain, by weight:

— 50 to 95% of the mixture (a), and

— 50 to 5% of the aqueous solution (b), in which the content by weight of dry product(s) is between 30 and 50%.

16. Use according to any one of claims 12, 14 and 15, characterised in that the use dose of the adjuvant composition is between 2 and 12% by weight, relative to the hydraulic binder.

17. Use of the compositions according to any one of claims 1 to 11 as adjuvants to be incorporated into mixtures for the manufacture of hydraulic binder slurries intended for the manufacture of industrial floors based on open-graded bituminous mixes.

18. Use according to claim 17, characterised in that the adjuvant compositions contain, by weight:

— 10 to 50% of the mixture (a), and

— 90 to 50% of the aqueous solution (b), in which the content by weight of dry product(s) is between 10 and 30%.

19. Use according to either one of claims 17 and 18, characterised in that the use dose of the adjuvant composition is between 1 and 10% by weight, relative to the hydraulic binder.

20. Use according to any one of claims 12 to 19, characterised in that the hydraulic binder is a cement.

**Claims for the Contracting State:**
AT

1. Use of a composition obtained by mixing:

(a) 10 to 95% by weight of at least two aqueous dispersions of different vinyl polymers, containing 30 to 60% of dry polymers and chosen from at least two of the groups comprising:

— the latices (designated by: latices A) which result from the copolymerisation of a monomer of the aromatic hydrocarbon type, containing from 2 to 14 carbon atoms and one or two bonds of ethylenic character, with a monomer of the acrylic or methacrylic type, which can be an acid, an ester of this acid with saturated aliphatic or cycloaliphatic alcohols having up to 8 carbon atoms, or a nitrile, an amide or a anhydride derived from this acid;

— the latices (designated by: latices B) which result from the copolymerisation of a monomer of the aromatic hydrocarbon type, containing from 8 to 14 carbon atoms and one or two bonds of ethylenic character, with a monomer of the diethylenic aliphatic hydrocarbon type, containing from 4 to 14 carbon atoms;

— the latices (designated by: latices C) which result from the homopolymerisation of a monomer chosen from the group comprising the vinyl esters of saturated aliphatic acids or of aromatic acids having up to 10 carbon atoms; and

— the latices (designated by: latices D) which result from the copolymerisation of at least two vinyl esters chosen from amongst those mentioned for the latex C; and

(b) 90 to 5% by weight of a 10-50% strength aqueous solution containing either a water-reducing agent or a mixture of a water-reducing agent with a water-soluble salt derived from an oxygen-containing, mineral or carboxylic monoacid or polyacid, at least one of the acid groups of which has an ionisation constant pKa, in water at 25°C, of less than 2.5, as an adjuvant to be incorporated into mixtures based on hydraulic binders.

2. Use of the composition obtained according to claim 1, in which the latex mixture (a) is a binary mixture of the formula: latex A + latex B, having the meanings given in claim 1, for the purpose indicated in claim 1.

3. Use of the composition obtained according to claim 1, in which the latex mixture (a) is a ternary mixture of the formula: latex A + latex B + latex C, having the meanings given in claim 1, for the purpose indicated in claim 1.

4. Use of the composition obtained according to claim 2, in which the amount of latex A in the mixture of latex A + latex B, expressed as the weight ratio latex A/latex B, is between 0.5 and 50, for the purpose indicated in claim 1.

5. Use of the composition obtained according to claim 3, in which the weight ratio latex A/latex B is between 0.5 and 50 and the amount of latex C represents up to 30% of the weight of the mixture of latex A + latex B + latex C, for the purpose indicated in claim 1.

6. Use of the composition obtained according to any one of claims 1 to 5, in which the water-reducing agent consists of the water-soluble salts of condensation products, having a molecular weight of between 1500 and 10000, obtained by condensing, with formaldehyde, products resulting from the sulphonation of monocyclic or fused polycyclic aromatic hydrocarbons containing from 1 to 12 benzene nuclei, or of a mixture of the said salts with water-soluble salts derived from the products resulting from the sulphonation of fused polycyclic aromatic hydrocarbons containing from 2 to 12 benzene nuclei, for the purpose indicated in claim 1.

7. Use of the composition obtained according to any one of claims 1 to 6, containing 50 to 95% of the mixture (a) and 50 to 5% of the aqueous solution (b) as an adjuvant to be incorporated into mixtures for the manufacture of mortars and concretes, based on hydraulic binders, which are to be bonded to construction materials, and into slops for bonding fresh mortars and concretes, in an amount of between 2 and 12% by weight, relative to the hydraulic binder.

8. Use of the composition obtained according to claim 7, characterised in that it consists in carrying out the following operations in succession:

(α) a fresh mortar or concrete containing the adjuvant composition is prepared;

(β) the construction material is coated with a thin film of an enriched bonding slop containing an aliquot of the mortar or concrete prepared under (α), water and an additional amount of adjuvant

composition; and

(γ) 15 to 45 minutes after the substrate has been coated with the enriched slop, the remaining mortar or concrete is then applied.

9. Use of the composition obtained according to any one of claims 1 to 6, containing 10 to 50% of the mixture (a) and 90 to 50% of the aqueous solution (b) in which the content by weight of dry products is between 10 and 30%, as an adjuvant to be incorporated into mixtures for the manufacture of hydraulic binder slurries intended for the manufacture of industrial floors based on open-graded bituminous mixes, in an amount of between 1 and 10%, relative of the hydraulic binder.

**Patentansprüche für die Vertragsstaaten:**
BE, CH, LI, DE, FR, GB, IT, NL, SE

1. Zusammensetzungen, brauchbar als Zusatzmittel für hydraulische Bindemittelgemische, dadurch gekennzeichnet, dass sie als wesentliche Komponenten enthalten:

(a) ein Gemisch aus mindestens zwei wässrigen Dispersionen von unterschiedlichen Vinylpolymerisaten, ausgewählt aus mindestens zwei der folgenden Gruppen:

— Latices A, erhalten durch Copolymerisation eines aromatischen Kohlenwasserstoffs mit 8 bis 14 Kohlenstoffatomen und einer oder zwei ethylenischen Doppelbindung(en) mit einem Acryl- oder Methacrylmonomeren, der eine Säure, ein Ester dieser Säure mit gesättigten aliphatischen oder cycloaliphatischen Alkoholen mit bis zu 8 Kohlenstoffatomen oder ein von dieser Säure abgeleitetes Nitril, Amid oder Anhydrid sein kann,

— Latices B, erhalten durch Copolymerisation eines aromatischen Kohlenwasserstoffs mit 8 bis 14 Kohlenstoffatomen und einer oder zwei ethylenischen Doppelbindung(en) mit einem aliphatischen diethylenischen Kohlenwasserstoff mit 4 bis 14 Kohlenstoffatomen,

— Latices C, erhalten durch Homopolymerisation eines Monomeren, ausgewählt aus der Gruppe der Vinylester von gesättigten aliphatischen Säuren oder aromatischen Säuren mit bis zu 10 Kohlenstoffatomen,

— Latices D, erhalten durch Copolymerisation von mindestens zwei der für die Latices C genannten Vinylester;

(b) eine wässrige Lösung, die entweder ein Mittel zur Verringerung des Wassergehaltes (der hydraulischen Bindemittel) oder ein Gemisch aus einem Mittel zur Verringerung des Wassergehaltes und einem wasserlöslichen Salz, abgeleitet von einer ein- oder mehrbasischen sauerstoffhaltigen Mineralsäure oder Carbonsäure, bei der mindestens eine der Säuregruppen eine Ionisationskonstante pKa in Wasser bei 25°C unter 2,5 aufweist, enthält.

2. Zusammensetzungen nach Anspruch 1, dadurch gekennzeichnet, dass das Gemisch (a) der Latices ein binäres Gemisch der Formel Latex A + Latex B ist, wobei die Latices A und B die in Anspruch 1 angegebene Bedeutung haben.

3. Zusammensetzungen nach Anspruch 1, dadurch gekennzeichnet, dass das Gemisch (a) der Latices ein ternäres Gemisch der Formel Latex A + Latex B + Latex C ist, wobei die Latices A, B und C die in Anspruch 1 angegebene Bedeutung haben.

4. Zusammensetzungen nach Anspruch 2, dadurch gekennzeichnet, dass der Anteil des Latex A im Gemisch aus Latex A und Latex B, angegeben durch das Gewichtsverhältnis Latex A zu Latex B, 0,5 bis 50 ausmacht.

5. Zusammensetzungen nach Anspruch 3, dadurch gekennzeichnet, dass das Gewichtsverhältnis von Latex A zu Latex B den in Anspruch 4 angegebenen Wert hat und dass die Menge des Latex C bis zu 30 Gew.-% des Gemisches aus Latex A + Latex B + Latex C ausmacht.

6. Zusammensetzungen nach einem der Ansprüche 1 bis 5, dadurch gekennzeichnet, dass das Mittel zur Verringerung des Wassergehaltes besteht aus: den wasserlöslichen Salzen der Kondensationsprodukte mit Molekulargewicht 1500 bis 10000 aus Formaldehyd und Sulfonierungsprodukten von einkernigen oder mehrkernigen kondensierten aromatischen Kohlenwasserstoffen mit 1 bis 12 Benzolringen, oder aus dem Gemisch dieser Salze mit wasserlöslichen Salzen, abgeleitet von Sulfonierungsprodukten von polycyclischen kondensierten aromatischen Kohlenwasserstoffen, enthaltend 2 bis 12 Benzolringe.

7. Zusammensetzungen nach einem der Ansprüche 1 bis 6, dadurch gekennzeichnet, dass das Salz der mineralischen sauerstoffhaltigen Säure oder Carbonsäure, das der wässrigen Lösung (b) zusätzlich zu dem Mittel zur Verringerung des Wassergehaltes zugesetzt werden kann, ausgewählt wird aus der Gruppe der Alkalisalze und Ammoniumsalze von Salpetersäure, schwefliger Säure, Schwefelsäure, phosphoriger Säure, Orthophosphorsäure, Pyrophosphorsäure, Chromsäure, Cyanoessigsäure, Cyanopropionsäure, Maleinsäure, Oxalsäure und o-Nitrobenzoesäure.

8. Zusammensetzungen nach einem der Ansprüche 1 bis 7, dadurch gekennzeichnet, dass sie

— 10 bis 95% Gew.-% Gemisch (a) aus mindestens zwei Latices und

— 90 bis 5% Gew.-% der wässrigen Lösung (b) enthalten.

9. Zusammensetzungen nach einem der Ansprüche 1 bis 8, dadurch gekennzeichnet, dass die Latices 30 bis 60% Polymerisat-Feststoff enthalten.

10. Zusammensetzungen nach einem der Ansprüche 1 bis 9, dadurch gekennzeichnet, dass die wässrige Lösung (b) 10 bis 50% Feststoff(e) enthält.

11. Zusammensetzungen nach Anspruch 10, dadurch gekennzeichnet, dass der Gewichtsanteil des löslichen Salzes der Mineralsäure oder Carbonsäure in dem Gemisch der Feststoffe (Mittel zur Verringerung des Wasseranteils und Salz einer Mineralsäure oder Carbonsäure) höchstens 25% ausmacht.

12. Verwendung der Zusammensetzungen nach einem der Ansprüche 1 bis 11 als Zusatzmittel für hydraulische Bindemittelgemische zur Herstellung von Mörteln und Betonen, die auf Baumaterialien verankert werden sollen.

13. Verwendung der Zusammensetzungen nach einem der Ansprüche 1 bis 11 als Zusatzmittel für

hydraulische Bindemittelgemische in Aufschlämmungen von Frischmörteln und Frischbetonen zur Verankerung auf Baumaterialien.

14. Verwendung nach den Ansprüchen 12 und 13, dadurch gekennzeichnet, dass sie nacheinander folgende Arbeitsschritte umfasst:

( α ) man stellt einen Frischmörtel oder Frischbeton her, der das Zusatzmittel enthält,

( β ) man überzieht das Baumaterial mit einem dünnen Film einer angereicherten Aufschlämmung für die Verankerung, die einen aliquoten Teil des unter ( α ) hergestellten Mörtels oder Betons, Wasser sowie eine zusätzliche Menge des Zusatzmittels enthält,

( γ ) 15 bis 45 Minuten nach dem Überziehen der Unterlage mit der angereicherten Aufschlämmung bringt man den restlichen Mörtel oder Beton auf.

15. Verwendung nach einem der Ansprüche 12 bis 14, dadurch gekennzeichnet, dass die als Zusatzmittel verwendeten Zusammensetzungen

— 50 bis 95 Gew.-% des Gemisches (a) und

— 50 bis 5 Gew.-% der wässrigen Lösung (b) enthalten, deren Gehalt an Feststoff(en) 30 bis 50 Gew.-% ausmacht.

16. Verwendung nach einem der Ansprüche 12, 14 und 15, dadurch gekennzeichnet, dass die Anwendungsdosis des Zusatzmittels 2 bis 12 Gew.-%, bezogen auf das hydraulische Bindemittel, ausmacht.

17. Verwendung der Zusammensetzungen nach einem der Ansprüche 1 bis 11 als Zusatzmittel zur Herstellung von Vergussmassen auf der Basis von hydraulischen Bindemitteln, die zur Herstellung von nicht überdachten Industriefussböden auf der Basis von Asphalt-Strassendecken bestimmt sind.

18. Verwendung nach Anspruch 17, dadurch gekennzeichnet, dass die Zusatzmittel enthalten:

— 10 bis 50 Gew.-% Gemisch (a),

— 90 bis 50 Gew.-% wässrige Lösung (b) mit einem Gehalt an Feststoff(en) von 10 bis 30 Gew.-%.

19. Verwendung nach einem der Ansprüche 17 und 18, dadurch gekennzeichnet, dass die Anwendungsdosis des Zusatzmittels 1 bis 10 Gew.-%, bezogen auf das hydraulische Bindemittel ausmacht.

20. Verwendung nach einem der Ansprüche 12 bis 19, dadurch gekennzeichnet, dass das hydraulische Bindemittel ein Zement ist.

**Patentansprüche für den Vertragsstaat:**
AT

1. Verwendung einer Zusammensetzung, die durch Vermischen von

(a) 10 bis 95 Gew.-% mindestens zweier wässriger Dispersionen von unterschiedlichen Vinylpolymerisaten mit einem Feststoffgehalt von 30 bis 60%, ausgewählt aus mindestens zwei der folgenden Gruppen:

— Latices A, erhalten durch Copolymerisation eines aromatischen Kohlenwasserstoffs mit 8 bis 14 Kohlenstoffatomen und einer oder zwei ethylenischen Doppelbindung(en) mit einem Acryl- oder Methacrylmonomeren, der eine Säure, ein Ester dieser Säure mit gesättigten aliphatischen oder cycloaliphatischen Alkoholen mit bis zu 8 Kohlenstoffatomen oder ein von dieser Säure abgeleitetes Nitril, Amid oder Anhydrid sein kann,

— Latices B, erhalten durch Copolymerisation eines aromatischen Kohlenwasserstoffs mit 8 bis 14 Kohlenstoffatomen und einer oder zwei ethylenischen Doppelbindung(en) mit einem aliphatischen diethylenischen Kohlenwasserstoff mit 4 bis 14 Kohlenstoffatomen,

— Latices C, erhalten durch Homopolymerisation eines Monomeren, ausgewählt aus der Gruppe der Vinylester von gesättigten aliphatischen Säuren oder aromatischen Säuren mit bis zu 10 Kohlenstoffatomen,

— Latices D, erhalten durch Copolymerisation von mindestens zwei der für die Latices C genannten Vinylester;

(b) 90 bis 5 Gew.-% einer wässrigen 10 bis 50%igen Lösung, die entweder ein Mittel zu Verringerung des Wassergehaltes (der hydraulischen Bindemittel) oder ein Gemisch aus einem Mittel zu Verringerung des Wassergehaltes und einem wasserlöslichen Salz, abgeleitet von einer ein- oder mehrbasischen sauerstoffhaltigen Mineralsäure oder Carbonsäure, bei der mindestens eine der Säuregruppen eine Ionisationskonstante pKa in Wasser bei 25°C unter 2,5 aufweist, erhalten worden ist, als Zusatzmittel für hydraulische Bindemittelgemische.

2. Verwendung der Zusammensetzung nach Anspruch 1, in der das Gemisch (a) der Latices ein binäres Gemisch der Formel Latex A + Latex B ist, wobei die Latices A und B die in Anspruch 1 angegebene Bedeutung haben, für den in Anspruch 1 angegebenen Zweck.

3. Verwendung der Zusammensetzung nach Anspruch 1, in der das Gemisch (a) der Latices ein ternäres Gemisch der Formel Latex A + Latex B + Latex C ist, wobei die Latices A, B und C die in Anspruch 1 angegebene Bedeutung haben, für den in Anspruch 1 angegebenen Zweck.

4. Verwendung der Zusammensetzung nach Anspruch 2, in der der Anteil des Latex A im Gemisch aus Latex A und Latex B, angegeben durch das Gewichtsverhältnis Latex A zu Latex B, 0,5 bis 50 ausmacht, für den in Anspruch 1 angegebenen Zweck.

5. Verwendung der Zusammensetzung nach Anspruch 3, in der das Gewichtsverhältnis von Latex A zu Latex B 0,5 bis 50 ausmacht und die Menge des Latex C bis zu 30 Gew.-% des Gemisches aus Latex A + Latex B + Latex C ausmacht, für den in Anspruch 1 angegebenen Zweck.

6. Verwendung der Zusammensetzung nach einem der Ansprüche 1 bis 5, in der das Mittel zur Verringerung des Wassergehaltes besteht aus: den wasserlöslichen Salzen der Kondensationsprodukte mit Molekulargewicht 1500 bis 10000 aus Formaldehyd und Sulfonierungsprodukten von einkernigen oder mehrkernigen kondensierten aromatischen Kohlenwasserstoffen mit 1 bis 12 Benzolringen, oder aus dem Gemisch dieser Salze mit wasserlöslichen Salzen, abgeleitet von Sulfonierungsprodukten von polycyclischen kondensierten aromatischen Kohlenwasserstoffen, enthaltend 2 bis 12 Benzolringe, für den in Anspruch 1 angegebenen Zweck.

7. Verwendung der Zusammensetzung nach einem der Ansprüche 1 bis 6 enthaltend 50 bis 95%

Gemisch (a) und 50 bis 5% der wässrigen Lösung (b), als Zusatzmittel für hydraulische Bindemittelgemische zur Herstellung von Mörteln und Betonen, die auf Baumaterialien verankert werden sollen, und in Aufschlämmungen von Frischmörteln und Frischbetonen zur Verankerung auf Baumaterialien, in einer Menge von 2 bis 12 Gew.-%, bezogen auf das hydraulische Bindemittel.

8. Verwendung der Zusammensetzung nach Anspruch 7, dadurch gekennzeichnet, dass sie nacheinander folgende Arbeitsschritte umfasst:

( α ) man stellt einen Frischmörtel oder Frischbeton her, der das Zusatzmittel enthält,

( β ) man überzieht das Baumaterial mit einem dünnen Film einer angereicherten Aufschlämmung für die Verankerung, die einen aliquoten Teil des unter ( α ) hergestellten Mörtels oder Betons, Wasser sowie eine zusätzliche Menge des Zusatzmittels enthält,

( γ ) 15 bis 45 Minuten nach dem Überziehen der Unterlage mit der angereicherten Aufschlämmung bringt man den restlichen Mörtel oder Beton auf.

9. Verwendung der Zusammensetzung nach einem der Ansprüche 1 bis 6, enthaltend 10 bis 50 Gew.-% Gemisch (a) und 90 bis 50 Gew.-% wässrige Lösung (b) mit einem Gehalt an Feststoff(en) von 10 bis 30 Gew.-% als Zusatzmittel zur Herstellung von Vergussmassen auf der Basis von hydraulischen Bindemitteln, die zur Herstellung von nicht überdachten Industriefussböden auf der Basis von Asphalt-Strassendecken bestimmt sind.